# DEMANDE DE BREVET EUROPEEN

(11) **EP 2 875 722 A1**
(43) Date de publication de la demande: **27.05.2015**
(21) Numéro de dépôt: 14194419.9
(22) Date de dépôt: 24.11.2014
(51) Int. Cl.: A01G 17/04

(54) **Tuteur pour plant de vigne**

(30) Priorité: 26.11.2013 FR 1361659
(71) Demandeur: Bidault, Stéphane, 21190 Corpeau (FR)
(72) Inventeur: Bidault, Stéphane, 21190 Corpeau (FR)
(74) Mandataire: Chevalier, Renaud Philippe

(57) **Abrégé**

L'invention a pour objet un tuteur (1) pour plant (100) de vigne comprenant une partie supérieure (2) destinée à supporter le plant (100) et une partie inférieure (3) destinée à être enfoncée dans le sol (101), caractérisé en ce que le tuteur (1) comprend en outre une partie intermédiaire (4) positionnée entre la partie inférieure (3) et la partie supérieure (3), ladite partie intermédiaire (4) étant équipée d'une surface d'appui (5) saillante s'étendant dans une direction sensiblement perpendiculaire par rapport à un axe longitudinal du tuteur (1), la surface d'appui (5) étant conçue pour résister à un effort correspondant à un effort exercé en direction du sol (101) pour provoquer l'enfoncement de la partie inférieure (3) dans le sol (101).

## Description

L'invention concerne le domaine viticole et notamment les tuteurs pour plants de vigne.

Généralement, un tuteur a pour fonction d'assurer la tenue et la protection d'un jeune plant pendant les premières années de son développement. De manière connue, on peut juxtaposer au tuteur un moyen de protection tel un manchon permettant de protéger le plant des outils de travail du sol.

Classiquement, un tuteur est une tige en bambou, en plastique, en bois ou métal. Selon le matériau utilisé pour la réalisation du tuteur et les conditions extérieures subies par ce dernier, la durée de vie d'un tuteur est de l'ordre de deux à trois ans. Or, un plant a besoin d'une protection efficace pendant quatre à cinq ans, au cours desquels le plant se développe et croît.

De manière connue, un tuteur est fixé sur un fil porteur au moyen d'un accessoire de maintien ou alternativement, peut avoir une forme adaptée, en U ou en I ou autre, lui permettant de tenir directement sur le fil porteur.

La mise en place d'un tuteur classique est réalisée en plusieurs étapes dans lesquelles on enfonce le tuteur dans le sol au moyen d'une masselotte, puis on place le plant à proximité du tuteur, on enfonce le renfort de tuteur dans le sol et on attache le plant au tuteur par une ficelle. Enfin, on met en place une protection souple de type filet ou manchon permettant de protéger le plant des outils de travail du sol.

Un des inconvénients de ces tuteurs réside dans leur installation dans le sol. En effet, comme dit précédemment, les tuteurs sont enfoncés dans le sol en deux opérations éreintantes et dangereuses puisqu'on utilise une masselotte. Ces opérations d'enfoncement sont donc fastidieuses et chronophages de par la répétition des tâches, ce qui a un impact aussi bien sur la main d'oeuvre que sur la rentabilité de l'opération.

L'invention a pour but de remédier à tout ou partie des inconvénients précités.

L'invention a pour objet un tuteur pour plant de vigne comprenant une partie supérieure destinée à supporter le plant et une partie inférieure destinée à être enfoncée dans le sol, caractérisé en ce que le tuteur comprend en outre une partie intermédiaire positionnée entre la partie inférieure et la partie supérieure, ladite partie intermédiaire étant équipée d'une surface d'appui saillante s'étendant dans une direction sécante par rapport à un axe longitudinal du tuteur, la surface d'appui étant conçue pour résister à un effort correspondant à un effort exercé en direction du sol pour provoquer l'enfoncement de la partie inférieure dans le sol.

Ainsi, l'enfoncement du tuteur dans le sol est facilité grâce à l'utilisation de la surface d'appui du tuteur selon l'invention, réduisant les efforts de la main d'oeuvre et le nombre d'opérations d'enfoncement, et permettant d'effectuer la campagne de plantage plus rapidement. En effet, l'enfoncement du tuteur est réalisé sous l'action du pied d'un exécutant prenant appui sur la surface d'appui du tuteur et exerçant un effort sur ladite surface d'appui en direction du sol pour enfoncer la partie inférieure du tuteur dans le sol. Ainsi, on s'affranchit d'un moyen d'enfoncement de type masselotte, dont l'actionnement répercute des chocs violents dans les membres de l'exécutant provoquant tendinites et microtraumatismes des articulations, pour préférer un enfoncement par le pied, plus doux. En outre, grâce à cette configuration l'exécutant utilise sa propre masse pour diminuer d'autant les efforts à fournir pour planter le tuteur.

Selon une caractéristique de l'invention, la surface d'appui forme une butée limitant l'enfoncement du tuteur dans le sol. Avantageusement, la partie inférieure présente une longueur prédéterminée et/ou standardisée.

Selon une autre caractéristique de l'invention, la partie supérieure du tuteur est de forme sensiblement incurvée par rapport à l'axe longitudinal du tuteur. Avantageusement, la courbure de la partie supérieure définit un espace semi-ouvert conformé pour recevoir le plant. Cette courbure permet de protéger le plant en formant une demi-coque de protection autour dudit plant.

Selon une autre caractéristique de l'invention, la partie inférieure du tuteur est incurvée par rapport à l'axe longitudinal du tuteur. Avantageusement, la forme incurvée de la partie inférieure permet un meilleur ancrage dans le sol et protège les racines du plant de vigne.

Selon une autre caractéristique de l'invention, la courbure de la partie inférieure est positionnée dans le prolongement de la courbure de la partie supérieure. Ainsi la courbure du tuteur protège le plant aussi bien en amont du plant, au niveau de la racine, qu'en aval du plant, au niveau des feuilles.

Selon une autre caractéristique de l'invention, la partie inférieure comprend au moins un bord acéré, ce qui facilite l'enfoncement de la partie inférieure dans le sol.

Selon une autre caractéristique de l'invention, le tuteur est réalisé en matériau imputrescible, le tuteur a une plus grande longévité et résiste mieux aux agressions extérieures et aux intempéries.

Selon une autre caractéristique de l'invention, la partie supérieure comprend une portion supérieure de préhension manuelle du tuteur, ce qui permet une meilleure prise en main.

Selon une autre caractéristique de l'invention, la partie supérieure présente au moins un évidement, la structure du tuteur en est allégée et une économie de matière est réalisée.

Selon une autre caractéristique de l'invention, la partie supérieure présente au moins deux évidements séparés par une bande de rigidification conformée pour être attachée au plant. Avantageusement, le plant est attaché à la bande de rigidification au moyen d'une ficelle ou analogue.

Selon une autre caractéristique de l'invention, la partie inférieure du tuteur est de forme sensiblement triangulaire et l'extrémité libre de ladite partie inférieure est en pointe.

Selon une autre caractéristique de l'invention, un ajourage est ménagé sur la surface d'appui. De préférence, l'ajourage d'un premier tuteur est conformé pour recevoir la pointe d'une partie inférieure d'un second tuteur, ainsi on peut empiler les tuteurs, selon l'invention, les uns sur les autres, pour gagner de la place lors du stockage de ces derniers par exemple.

Selon une autre caractéristique de l'invention, le tuteur est conformé pour recevoir un filet de protection.

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels:
- la figure 1 est une vue de face d'un tuteur selon l'invention,
- la figure 2 est une vue de côté du tuteur représenté en figure 1,
- la figure 3 est une vue schématique en perspective du tuteur représenté en figures 1 et 2, ancré dans le sol.

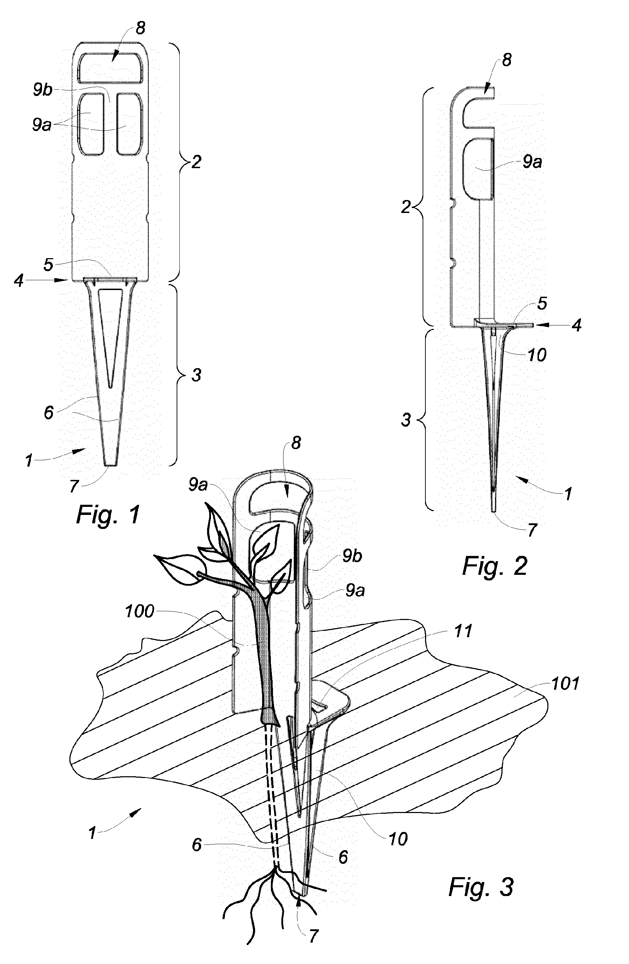

Comme illustré aux figures 1 à 3, le tuteur 1 selon l'invention comprend une partie supérieure 2 destinée à être hors du sol 101, une partie intermédiaire 4 destinée à être à proximité du sol 101 et une partie inférieure 3 destinée à être plantée dans le sol 101.

En figure 1, on peut voir que la partie inférieure 3 présente une forme sensiblement triangulaire se terminant par une pointe 7. Les bords 6 de la partie inférieure 3 sont acérés pour faciliter la pénétration du tuteur 1 dans le sol 101.

Dans l'exemple illustré, la partie supérieure 2 et la partie inférieure 3 sont incurvées par rapport à un axe longitudinal du tuteur 1. La courbure de la partie inférieure 3 est dans le prolongement de la courbure de partie supérieure 2 du tuteur 1. La courbure de la partie supérieure 2 définit un espace ouvert demi-cylindrique conformé pour accueillir le plant 100, comme visible en figure 3.

Comme on peut le voir notamment aux figures 2 et 3 les rebords de la partie supérieure 2 sont saillants par rapport à la partie inférieure 3 et s'étendent dans une direction sensiblement perpendiculaire à l'axe longitudinal du tuteur 1, de manière à former une demi-coque de protection autour du plant 100.

Le tuteur 1 présente deux évidements 9a en partie supérieure 2, comme on peut le voir notamment en figure 1. Ces évidements 9a sont ménagés pour alléger la structure du tuteur 1. Une bande de rigidification 9b est positionnée entre ces évidements 9a, ce qui permet de rigidifier la structure du tuteur 1 au niveau des évidements 9a mais également d'offrir la possibilité d'attacher le plant 100 autour de ladite bande 9b à l'aide d'une ficelle par exemple.

Selon l'invention, le tuteur comprend un moyen de préhension 8. Ce moyen de préhension 8 est de type poignée et est réalisé par un enlèvement de matière dans la partie supérieure du tuteur 1 comme visible aux figures 1 à 3.

Comme représenté aux figures 2 et 3, le tuteur 1 comprend dans sa partie intermédiaire 4 une surface d'appui 5. Cette surface d'appui 5 est conformée pour recevoir le pied d'une personne positionnant les tuteurs dans le sol. La surface d'appui 5 est saillante par rapport aux parties inférieure 3 et supérieure 2 et s'étend dans une direction sensiblement perpendiculaire par rapport à un axe longitudinal du tuteur 1.

En outre, comme illustré aux figures 2 et 3, la surface d'appui 5 s'étend dans un sens opposé à celui dans lequel s'étendent les rebords de la partie supérieure 2.

Comme illustré en figure 3, la surface d'appui est pourvue d'un ajourage 11. L'ajourage 11 est conformé pour recevoir une pointe 7 d'un autre tuteur 1 et permettre ainsi l'empilement de plusieurs tuteurs 1 selon l'invention.

Avantageusement, le tuteur 1 est pourvu d'un rigidificateur 10 en partie inférieure 3 permettant la bonne tenue de la surface d'appui 5 et permettant d'éviter l'affaissement de la surface d'appui 5 notamment lorsqu'un effort est appliqué sur ladite surface d'appui 5.

Selon l'invention, le tuteur 1 est tout d'abord enfoncé dans le sol 101 en exerçant un effort en direction du sol 101 sur la surface d'appui 5 avec le pied et en tenant éventuellement le tuteur 1 par le moyen de préhension 8. Le tuteur 1 s'étend ainsi dans une direction sensiblement perpendiculaire au sol 101 et oblige le plant 100 à adopter cette même direction, comme illustré en figure 3.

Bien entendu, l'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Tuteur (1) pour plant (100) de vigne comprenant une partie supérieure (2) destinée à supporter le plant (100) et une partie inférieure (3) destinée à être enfoncée dans le sol (101), **caractérisé en ce que** le tuteur (1) comprend en outre une partie intermédiaire (4) positionnée entre la partie inférieure (3) et la partie supérieure (3), ladite partie intermédiaire (4) étant équipée d'une surface d'appui (5) saillante s'étendant dans une direction sécante par rapport à un axe longitudinal du tuteur (1), la surface d'appui (5) étant conçue pour résister à un effort correspondant à un effort exercé en direction du sol (101) pour provoquer l'enfoncement de la partie inférieure (3) dans le sol (101) et **en ce que** la partie supérieure (2) du tuteur (1) est de forme sensiblement incurvée par rapport à l'axe longitudinal du tuteur (1).

2. Tuteur selon la revendication 1, **caractérisé en ce que** la surface d'appui (5) forme une butée limitant l'enfoncement du tuteur (1) dans le sol (101).

3. Tuteur selon l'une quelconque des revendications 1 ou 2, **caractérisé en ce que** la partie supérieure (2) du tuteur (1) est de forme sensiblement incurvée par rapport à l'axe longitudinal du tuteur (1).

4. Tuteur selon la revendication 3, **caractérisé en ce que** la courbure de la partie inférieure (3) est positionnée dans le prolongement de la courbure de la partie supérieure (2).

5. Tuteur selon l'une quelconque des revendications 1 à 4, **caractérisé en ce que** la partie inférieure (3) comprend au moins un bord acéré (6).

6. Tuteur selon l'une quelconque des revendications 1 à 5, **caractérisé en ce qu'**il est réalisé en matériau imputrescible.

7. Tuteur selon l'une quelconque des revendications 1 à 6, **caractérisé en ce que** la partie supérieure (2) comprend une portion supérieure (8) de préhension manuelle du tuteur (1).

8. Tuteur selon l'une quelconque des revendications 1 à 7, **caractérisé en ce que** la partie supérieure (2) présente au moins un évidement (9a).

9. Tuteur selon la revendication 8, **caractérisé en ce que** la partie supérieure présente au moins deux évidements (9a) séparés par une bande de rigidification (9b) conformée pour être attachée au plant (100).
